# EUROPÄISCHE PATENTSCHRIFT

(11) **EP 2 097 180 B1**
(45) Veröffentlichungstag und Bekanntmachung des Hinweises auf die Patenterteilung: **17.03.2010**
(21) Anmeldenummer: 07820835.2
(22) Anmeldetag: 02.10.2007
(51) Int. Cl.: B06B 1/02, G01S 7/523

(54) **SCHALTUNGSANORDNUNG ZUR AUSWERTUNG UND/ODER ZUR ANSTEUERUNG VON SCHALLWANDLERN**
CIRCUIT ARRANGEMENT FOR EVALUATING AND/OR FOR ACTIVATING SOUND TRANSDUCERS
AGENCEMENT DE CIRCUITS D'ÉVALUATION ET/OU DE COMMANDE DE CONVERTISSEURS ACOUSTIQUES

(30) Priorität: 28.11.2006 DE 102006056095
(43) Veröffentlichungstag der Anmeldung: 09.09.2009
(73) Patentinhaber: Robert Bosch GmbH, 70442 Stuttgart (DE)
(72) Erfinder: BECKERS, Roland, 78652 Lauffen (DE); RICHTER, Karl-Heinz, 71263 Weil Der Stadt (DE)
(86) Internationale Anmeldenummer: PCT/EP2007/060453
(87) Internationale Veröffentlichungsnummer: WO 2008/064944

(56) Entgegenhaltungen:
- DE-A1- 10 248 677

## Beschreibung

Die Erfindung betrifft eine Schaltungsanordnung zur Auswertung und/oder zur Ansteuerung von Schallwandlern für die Anwendung in Fahrzeugen insbesondere als Teil einer Einparkhilfe nach dem Oberbegriff des Anspruch 1. Die Erfindung betrifft ebenfalls einen Ultraschallsensor mit einer solchen Schaltungsanordnung.

### Stand der Technik

In Kraftfahrzeugen werden Ultraschallsensoren als Teil von Einparkhilfen, zur Parklückenvermessung oder zur Ausleuchtung toter Winkel eingesetzt. Diese Sensoren senden Schallimpulse aus und fangen die von Hindernissen reflektierten Signale auf, verstärken sie, konvertieren sie zu auswertbaren Signalen und liefern sie an ein Steuergerät. Dazu weisen die Sensoren einen Schallwandler und eine entsprechende Sende- und Empfangselektronik auf. Als besonders robuste Konstruktion hat sich ein topfförmiger Schallwandler bewährt, dessen Topfboden von einer schwingfähigen und von einem Piezoelement angeregten Membran gebildet wird. Um Reichweiten des Sensors von etwa 3 m zu ermöglichen, wird das Piezoelement mit einer vergleichsweise hohen Spannung zwischen 50 Volt und 100 Volt angesteuert, die normalerweise von einem Transformator, respektive einem Übertrager, mit einem Übersetzungsverhältnis von größer 1 erzeugt wird. Dabei wird auf der Seite der Primärwicklung, der Primärseite, eine Gleichspannung periodisch ein- und ausgeschaltet, wodurch auf der Sekundärseite, der Seite der Sekundärwicklung, eine entsprechend dem Übersetzungsverhältnis höhere Spannung abgreifbar ist. Diese wird als Ansteuerspannung für den Schallwandler genutzt.

Die von Hindernissen reflektierten Echosignale haben typischerweise Amplituden zwischen 0,1 mV und 1,0 mV. Allerdings befinden sich in der Umgebung des Fahrzeuges und im Fahrzeugs selbst Störquellen, die Störsignals auch in der Arbeitsfrequenz der Sensoren und mit vergleichbaren Amplituden erzeugen. Besonders häufig stören elektronische Vorschaltgeräte von Leuchtstoffröhren und Vorschaltgeräte von Gasentladungslampen in Kfz-Scheinwerfern. Da der Eingang des Verstärkers die empfindlichste Stelle der Auswerteelektronik der Sensoren ist, koppeln diese Störungen über den Verstärkungspfad ein.

Zur Störunterdrückung sind folgende Maßnahmen bekannt: Zum einen werden in der Schaltungstopologie und Schaltungsdimensionierung Tiefpass-, Hochpass- und Bandpass Filter vorgesehen. Zudem ist es bekannt, das Layout der Schaltung EMV-gerecht und in Multilayer auszuführen. Auch wird mit Abschirmungen der Gehäuse und von Schaltungsteilen gearbeitet.

In der DE 102 48 677 A1 wird ein Verfahren zur Kompensation magnetischer Störfelder beschrieben. Da der Übertrager selber als Antenne für den Empfang der magnetischen Störungen fungiert, wird in der DE 102 48 677 A1 der Einsatz eines zweiten Transformators mit identischen Eigenschaften vorgeschlagen.

### Aufgabe und Vorteile der Erfindung

Die Aufgabe der Erfindung besteht darin, eine Schaltungsanordnung zu schaffen, die mit geringem konstruktiven Aufwand und geringen Kosten eine möglichst effektive Unterdrückung der von elektrischen Feldern erzeugten Störungen ermöglicht.

Diese Aufgabe wird durch die Schaltungsanordnung mit den kennzeichnenden Merkmalen des Anspruch 1 gelöst. In den abhängigen Ansprüchen sind vorteilhafte Ausführungsformen genannt.

Wie aus dem Stand der Technik bekannt, so hat auch die erfindungsgemäße Schaltungsanordnung einen Übertrager in Form eines Transformators mit einer Primärwicklung und einer Sekundärwicklung, wobei die Wicklungen zu einem Übersetzungsverhältnis von größer als 1 führen. An der Sekundärwicklung sind Anschlüsse für den Schallwandler und an der Primärwicklung Anschlüsse für ein Ansteuermittel vorgesehen, wobei das Ansteuermittel, das von Transistoren oder einem ASIC gebildet sein kann, eine sich zeitlich ändernde Spannung an der Primärwicklung des Transformators erzeugt.

Der wesentliche Grundgedanke der Erfindung liegt nun darin, auf der Primärseite eine Antenne" zum Empfang elektrischer Signale vorzusehen, die auch auf die parasitären Störsignale empfindlich ist. Die von dieser Antenne empfangenen Signale werden durch einen Phasenschieber um 180° phasenverschoben und über einen Koppelpfad als Kompensationssignal der Sekundärseite zugeführt. Dabei ist die Schaltung so auszulegen, dass das Kompensationssignal, wenn es der Sekundärseite zugeführt wird, möglichst dieselbe Amplitude und eine um 180° verschobene Phasenlage, wie das von den Bauteilen der Sekundärseite aufgenommene Störsignal hat. Die gegeneinander in ihrer Phase verschobenen Signale gleicher Amplitude, nämlich das sekundärseitig empfangene Störsignal und das primärseitig "erzeugte" Kompensationssignal kompensieren sich gegenseitig. Ein wesentlicher Gesichtspunkt der Erfindung liegt somit in dem Kompensationsverfahren zur Unterdrückung der Störspannung, das sich vorteilhafterweise mit den in den Sensoren vorhandenen Bauteilen umsetzen lässt. Ein wesentlicher Vorteil ist, dass die Unterdrückung von E-Feld Störungen ohne Abschirmung möglich ist und dass die Unterdrückung von E-Feld Störungen in Kombination mit einer Abschirmung verbessert wird.

Nun ist es einerseits möglich, die Geometrie der Antenne derart auszulegen, dass die Amplitude der empfangenen Signale etwa der Amplitude der sekundärseitig eingestreuten elektrischen Störsignale entspricht. Eine Verstärkung der von der Antenne empfangenen Signale ist in diesem Fall nicht nötig. Dabei bezeichnet "Antenne" jegliche primärseitige Anordnung von Leitern, die eine bestimmte Sensibilität auf elektrische Felder hat.

Besonders vorteilhaft ist es jedoch, wenn der ehedem vorhandene Transformator oder Übertrager als Phasenschieber genutzt wird. In diesem Fall wird die Antenne zwischen das eine Ansteuermittel und den an der Primärwicklung vorgesehenen Anschluss geschaltet. Der Koppelpfad führt in diesem Fall unmittelbar über den Transformator. Dieser hat zweierlei Bedeutung. So erfährt das elektrische Signal auf dem Weg durch den Transformator einerseits eine Phasenverschiebung von 180° und wird andererseits entsprechend dem Übersetzungsverhältnis verstärkt. Infolge der Spannungstransformation kann die "Antenne", also die wirksame Antennenfläche, kleiner dimensioniert werden als die "parasitäre Antenne" am Verstärkereingang.

Es ist bekannt Transformatoren oder Übertrager mit zwei Primärwicklungen und einer Sekundärwicklung einzusetzen. Der Aufbau der Wicklungen ist so, dass die eine der Primärwicklungen keine Phasenverschiebung bewirkt während in der anderen eine Phasenverschiebung von 180° im Verhältnis zur Sekundärwicklung auftritt. Der Übertrager transformiert die Sendespannung auf einen höheren Wert und reduziert die Nachschwingzeit dadurch, dass die Piezokapazität durch die Sekundärinduktivität kompensiert wird. Dabei ist der Schwingkreis auf die Schallwandlerfrequenz abgestimmt.

Auch im Falle solcher Transformatoren oder Übertrager wird das Störsignal durch ein zweites Kompensationssignal kompensiert, das idealerweise den gleichen Betrag hat und in der Phase um 180° gedreht ist. Dabei wird ein künstlicher zweiter Koppelpfad von der Primärseite des Übertragers auf die Sekundärseite und damit auf den Verstärkereingang geschaffen. Dieser Anschluss der Primärseite erhält die Antenne. Damit eine Kompensation der Amplitude stattfindet, sind die Verhältnisse so auszulegen, dass die Störspannung an der Antenne der Störspannung am Verstärkereingang, dividiert durch das Übersetzungsverhältnis des Übertragers entspricht. Zudem ist die oben erwähnte Phasenbedingung einzuhalten. Im einfachsten Fall wird der Anschluss der zweiten Wicklung der Primärseite nicht als "Antenne" ausgeführt.

Besonders vorteilhaft ist es, wenn die Antenne als flächiger Leiter mit bestimmter Antennenfläche ausgebildet wird. Bei einer solchen Geometrie, insbesondere bei einer rechteckigen oder kreisförmigen Antennenfläche, lassen sich die Eigenschaften der Antenne gut vorherbestimmen. Zudem ist die Unterbringung der Antenne in der Schaltung verhältnismäßig einfach. Um eine möglichst gute Kompensation zu erhalten, ist es vorteilhaft, die Antennenfläche dieser Antenne so zu konzipieren, dass sie der von den Leitern der Sekundärseite gebildeten virtuellen Fläche dividiert durch das Übersetzungsverhältnis ü angepasst ist und dieser insbesondere zumindest nahezu entspricht. Somit wirken auf beiden Seiten des Transformators jeweils eine Antenne, wobei die primärseitige insbesondere eine um ü kleinere Empfindlichkeit aufweist. Dabei ist die tatsächliche Größe der Antennenfläche nur beschränkt vorausberechenbar. In Praxis wird es einiger Versuche bedürfen, eine für die spezielle Schaltungsanordnung geeignete Antenne und deren Anordnung zu finden.

Unter Umständen kann es vorteilhaft sein, auf der Primärseite eine zweite Antenne bestimmter Antennenfläche zwischen einem zweiten Ansteuermittel und dem dafür an der Primärwicklung vorgesehenen Anschluss vorzusehen, wobei die Antennenfläche der zweiten Antenne sich von der Antennenfläche der ersten Antenne unterscheidet. Mit derartiger Anordnung zweier Antennen an beiden Wicklungen der Primärseite ist die Wirkung der Antennen gegenläufig, da sich ihre Empfangsspannungen in der Phasenlage um 180° unterscheiden. Die erwünschte Kompensation wird durch unterschiedliche Größen der Antennen erreicht. Der Vorteil dieser Ausführungsform ist in einer bessere Anpassung der Kompensation zu sehen.

Es kann zudem von Vorteil sein, auch auf der Sekundärseite eine solche Antenne vorzusehen, deren Antennenfläche der oben genannten virtuellen Fläche zu der der sekundärseitigen Leiter hinzugerechnet wird. Eine solche sekundärseitige Antenne bewirkt eine bessere Kontrolle über die Störsignale. In dieser Konstellation ist die Vorausberechnung der zu erwartenden elektrischen Eigenschaften einfacher.

Es kann auch vorteilhaft sein, zu der erfindungsgemäßen Kompensation elektrischer Störfelder zusätzlich die magnetischen Störfelder beispielsweise mit der in der DE 102 48 677 A1 vorgeschlagenen Methode zu kompensieren.

### Ausführungsbeispiel

In den Zeichnungen sind zwei Ausführungsbeispiele dargestellt und unter Angabe weiterer Einzelheiten nachfolgend näher beschrieben. Es zeigen:
- Figur 1: eine erfindungsgemäße Schaltungsanordnung mit Transistoren und
- Figur 2: eine Schaltungsanordnung mit ASIC.

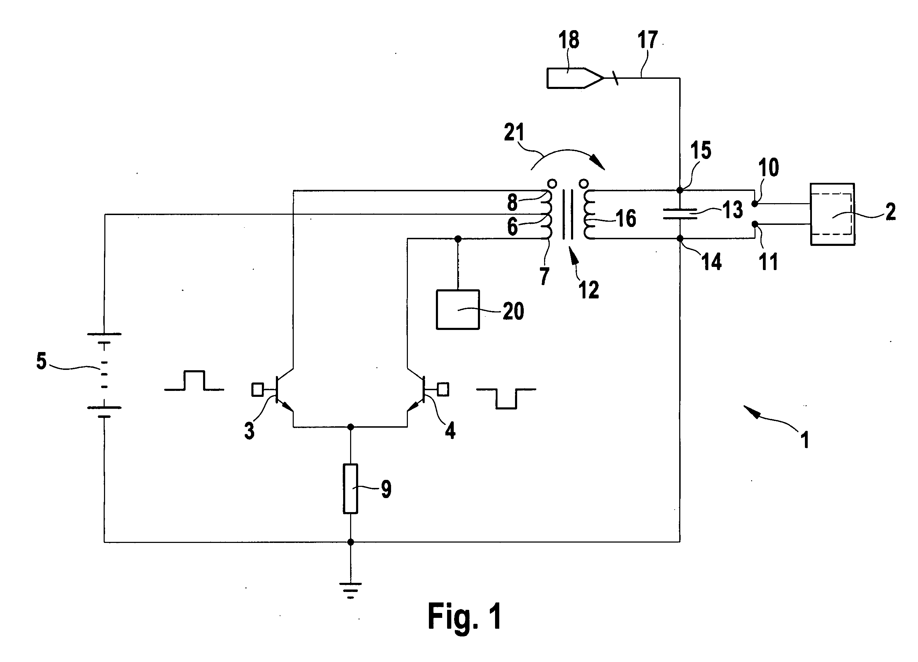

In Figur 1 ist das Prinzip einer solchen Ansteuerschaltung 1 für einen Schallwandler 2 dargestellt. Über Transistoren 3, 4 wird abwechselnd eine Spannungsquelle 5, die am Mittenanschluss 6 von zwei normalerweise gleichen Wicklungen 7, 8 liegt, abwechselnd an der jeweiligen Wicklung 7, 8 geschaltet. Die Wicklungen 7, 8 sind jeweils über die Transistoren 3, 4 und einen gemeinsamen Widerstand 9 mit einem Bezugspotential verbunden. So liegt primärseitig eine zeitlich sich ändernde Spannung an, die mit einem vorgegebenen Übersetzungsverhältnis ü auf die Sekundärseite transformiert wird. Das Übersetzungsverhältnis ergibt sich zu ü² = Lₛₑₖ / Lp. Dabei ist Lₛₑₖ die Induktivität der Sekundärseite und Lₚ die Induktivität der jeweiligen Wicklung 7 oder 8. Die erreichbare Spannung auf der Sekundärseite an Anschlüssen 10 und 11 für den Schallwandler 2 hängt von der Größe des primärseitigen Stroms, dem primärseitigen Spannungsbereich, dem Übersetzungsverhältnis und der Lastimpedanz auf der Sekundärseite des Transformators 12 ab. Der Transformator hat zwei Primärwicklungen 7,8 und eine Sekundärwicklung 16 mit dem durch die Punkte bezeichneten Wickelsinn.

Auf der Sekundärseite zwischen den Ausgängen 14 und 15 ist eine Kapazität 13 vorgesehen. Der Ausgang 14 der Sekundärwicklung 16 liegt zudem gemeinsam mit dem Widerstand 9 auf dem Bezugspotential der Spannungsquelle 5 und weist eine Verbindung zum Anschluss 11 auf. Der andere Ausgang 15 der Sekundärwicklung steht normalerweise neben dem Anschluss 10 auch über eine Verbindung 17 mit einer Auswerteschaltung 18 in elektrischem Kontakt. Die Größe des über die Verbindung 17 übertragenen "Empfangssignals" liegt typischerweise in einem Bereich zwischen 0,1 mV und 10 mV. Die Verarbeitung solcher vergleichsweise kleiner Signale erfordert eine Schaltungsauslegung und Auswahl von Bauteilen, derart dass eine möglichst große Unempfindlichkeit gegenüber Störungen aus der Umgebung gewährleistet ist.

Zur Kompensation der Störungen durch elektrische Felder ist auf der Primärseite eine Antenne 20 an die elektrische Verbindung des als erstes Ansteuermittel dienenden Transistors 4 mit der Primärwicklung 7 des Transformators 12 geschaltet. Die Antenne ist als flächiger Leiter ausgebildet und zum Empfang von den durch Störsignale erzeugten elektrischer Feldern geeignet. In dieser Anordnung kann für die Antenne eine Antennenfläche zwischen etwa 5 mm² und 15 mm² vorgesehen sein. Der Pfad zum Einkoppeln der von der Antenne 20 aufgenommenen Signale, der Koppelpfad 21, verläuft durch den Transformator 12. Dabei wirkt der Transformator 12 als Phasenschieber, der eine Phasenverschiebung der von der Antenne 20 empfangenen Störsignale um 180° bewirkt. Die Antennenfläche der Antenne 20 entspricht zumindest nahezu der von den Leitern der Sekundärseite gebildeten virtuellen Fläche dividiert durch das Übersetzungsverhältnis ü des der Transformators 12.

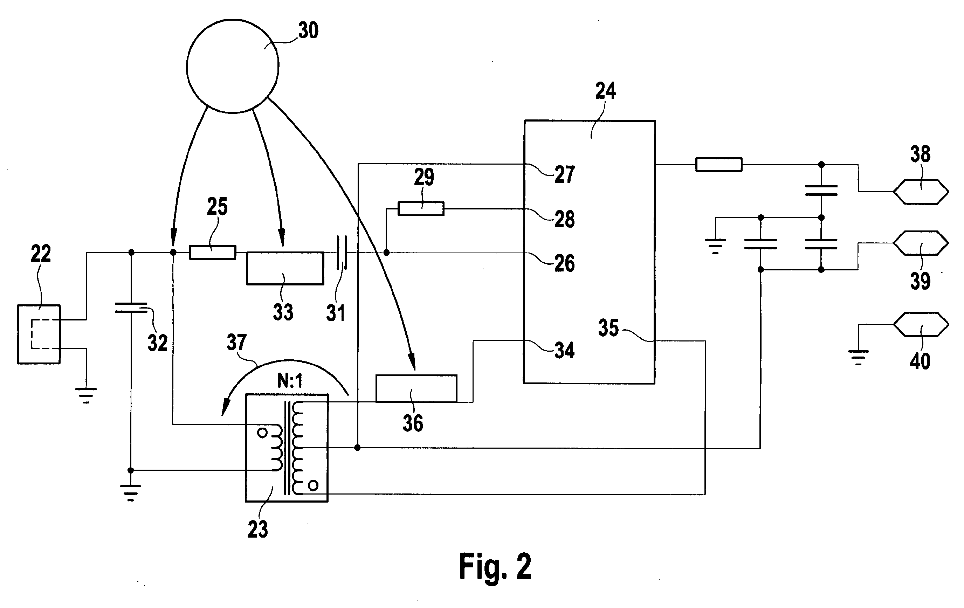

In Figur 2 ist eine Schaltung für einen Schallwandler 22 gezeigt, wobei die Ansteuerung des Transformators 23, der auch in diesem Beispiel wieder zwei Primärwicklungen und eine Sekundärwicklung aufweist, und die Auswertung der vom Schallwandler kommenden Signale über einen integrierten Schaltkreis 24 (ASIC) geschieht.

Wenn durch die Echosignale oder andere Schallsignale die Sensormembran angeregt wird, entsteht an den Anschlüssen des Schallwandlers 22 eine Spannung. Über einen Widerstand 25 wird die Echospannung dem vom ASIC 24 realisierten Verstärker über den Verstärkereingang 26 zugeführt. Der Verstärkerausgang 28 wird über den Widerstand 29 auf die Signalleitung gelegt. Die Versorgungsspannung für den Transformator 23 wird am ASIC 24 am Port 27 abgegriffen.

Die Einkopplung der Signale der Störquelle 30 (Koppelpfad) erfolgt hauptsächlich über die Verbindungsleitung des Schallwandlers mit der Leiterplatte und über die Leiterzüge und Bauelemente am Verstärkereingang 26 als da wären der Widerstand 25 die Kondensatoren 31 und 32 und die Sekundärseite der Transformators 23.. Alle Störsignale kommen am Summenpunkt 33 zusammen. Alle genannten Bauteile und Verbindungen können bei der Arbeitsfrequenz des Sensors als elektrisch "kurz" betrachtet werden, d.h. die Phasenverschiebung zwischen allen möglichen Koppelpunkten ist vernachlässigbar.

Die Primärseite des Transformators ist mit den Sendestufen 34 und 35 des ASIC 24 verbunden, die beim Senden ein Gegentaktsignal abgeben. In der übrigen Zeit sind die Ausgänge der Sendestufen hochohmig.

Auch in diesem Beispiel ist auf der Primärseite eine Antenne 36 vorgesehen, die ebenfalls die Störsignale empfängt. Die erfindungsgemäße Kompensation erfolgt über den durch den Transformator 23 gehenden Kompensationspfad 37.

Die Kommunikation mit einem nicht dargestellten Steuergerät erfolgt über den Punkt 38, wobei zwischen 39 und 40 die Versorgungsspannung anliegt.

## Patentansprüche

1. Schaltungsanordnung (1) zur Auswertung und/oder zur Ansteuerung von Schallwandlern (2,22) für die Anwendung in Fahrzeugen insbesondere als Teil einer Einparkhilfe, wobei die Schaltungsanordnung (1) einen Transformator (12,23) mit einer Primärwicklung (7,8) und einer Sekundärwicklung (16) umfasst und die Wicklungen zu einem Übersetzungsverhältnis ü von größer 1 führen, wobei an der Sekundärwicklung (16) Anschlüsse für einen Schallwandler (2,22) vorgesehen sind und wobei an der Primärwicklung Anschlüsse (7,8) für Ansteuermittel vorgesehen sind, die an der Primärwicklung (7,8) des Transformators (12,23) eine zeitlich sich ändernde Spannung erzeugen,
**dadurch gekennzeichnet,**
**dass** auf Seiten der Primärwicklung (Primärseite) (7,8) eine Antenne (20,36) vorgesehen ist, die zum Empfang von durch Störsignale erzeugter elektrischer Felder geeignet ist und die über einen Koppelpfad (21,37) mit der Seite der Sekundärwicklung (16) (Sekundärseite) verbunden ist, wobei im Koppelpfad (21,37) ein Mittel zur Phasenverschiebung vorgesehen ist, das eine Phasenverschiebung der von der Antenne (20,36) empfangenen elektrischen Störsignale um 180° bewirkt.

2. Schaltungsanordnung nach Anspruch 1,
**dadurch gekennzeichnet,**
**dass** die Geometrie der Antenne (20,36) derart ausgelegt ist, dass die Amplitude der empfangenen Signale etwa der Amplitude der auf der Sekundärseite eingestreuten elektrischen Störsignale entspricht.

3. Schaltungsanordnung nach Anspruch 1,
**dadurch gekennzeichnet,**
**dass** als Mittel zur Phasenverschiebung eine Seite des Transformators (12,23) dient, wobei der Koppelpfad (21,37) durch den Transformator (12,23) führt und wobei die Antenne (20,36) zwischen ein erstes Ansteuermittel (4,34) und dem dafür an der Primärwicklung (7) vorgesehenen Anschluss geschaltet ist.

4. Schaltungsanordnung nach einem der vorherigen Ansprüche,
**dadurch gekennzeichnet,**
**dass** die Antenne (20,36) als flächiger Leiter mit bestimmter Antennenfläche ausgebildet ist.

5. Schaltungsanordnung nach Anspruch 4,
**dadurch gekennzeichnet,**
**dass** die Antennenfläche der von den Leitern der Sekundärseite gebildeten virtuellen Fläche dividiert durch das Übersetzungsverhältnis ü angepasst ist, insbesondere dieser zumindest nahezu entspricht.

6. Schaltungsanordnung nach Anspruch 5,
**dadurch gekennzeichnet,**
**dass** die Antennenfläche rechteckig oder kreisförmig ist.

7. Schaltungsanordnung nach einem der vorherigen Ansprüche,
**dadurch gekennzeichnet,**
**dass** auf der Primärseite eine zweite Antenne bestimmter Antennenfläche zwischen ein zweites Ansteuermittel und dem dafür an der Primärwicklung vorgesehenen Anschluss geschaltet ist, wobei die Antennenfläche der zweiten Antenne sich von der Antennenfläche der ersten Antenne unterscheidet.

8. Schaltungsanordnung nach einem der vorherigen Ansprüche,
**dadurch gekennzeichnet,**
**dass** die Antennenfläche eine Größe zwischen 2 mm² und 20 mm² insbesondere zwischen 5 mm² und 15 mm² aufweist.

9. Schaltungsanordnung nach einem der vorherigen Ansprüche,
**dadurch gekennzeichnet,**
**dass** auf der Sekundärseite eine weitere Antenne angeordnet ist, deren Fläche der virtuellen Fläche hinzugerechnet wird.

10. Ultraschallsensor als Teil einer Einparkhilfe in einem Fahrzeug mit einem Schallwandler und einer Schaltungsanordnung nach einem der vorherigen Ansprüche.

## Claims

1. Circuit arrangement (1) for evaluating and/or for driving sound transducers (2, 22) for use in vehicles, in particular as part of a parking aid system, with the circuit arrangement (1) comprising a transformer (12, 23) with a primary winding (7, 8) and a secondary winding (16), and the windings leading to a transformation ratio ü of greater than 1, with connections for a sound transducer (2, 22) being provided on the secondary winding (16), and with connections (7, 8) for drive means being provided on the primary winding, the said drive means generating a voltage which changes over time across the primary winding (7, 8) of the transformer (12, 23),
**characterized**
**in that** an antenna (20, 36) is provided on the side of the primary winding (primary side) (7, 8), the said antenna being suitable for receiving electric fields which are generated by interference signals and the said antenna being connected to the side of the secondary winding (16) (secondary side) via a coupling path (21, 37), with a means for phase shifting being provided in the coupling path, this means creating a phase shift of the electrical interference signals received by the antenna (20, 36) through 180°.

2. Circuit arrangement according to Claim 1,
**characterized**
**in that** the geometry of the antenna (20, 36) is designed in such a way that the amplitude of the received signals corresponds approximately to the amplitude of the electrical interference signals scattered on the secondary side.

3. Circuit arrangement according to Claim 1,
**characterized**
**in that** one side of the transformer (12, 23) serves as a means for phase shifting, with the coupling path (21, 37) leading through the transformer (12, 23), and with the antenna (20, 36) being connected between a first drive means (4, 34) and the connection which is provided for the said drive means on the primary winding (7).

4. Circuit arrangement according to one of the preceding claims,
**characterized**
**in that** the antenna (20, 36) is in the form of a flat conductor with a specific antenna area.

5. Circuit arrangement according to Claim 4,
**characterized**
**in that** the antenna area is matched to, in particular at least virtually corresponds to, the virtual area which is formed by the conductors of the secondary side divided by the transformation ratio ü.

6. Circuit arrangement according to Claim 5,
**characterized**
**in that** the antenna area is rectangular or circular.

7. Circuit arrangement according to one of the preceding claims,
**characterized**
**in that**, on the primary side, a second antenna of a specific antenna area is connected between a second drive means and the connection which is provided for the said drive means on the primary winding, with the antenna area of the second antenna differing from the antenna area of the first antenna.

8. Circuit arrangement according to one of the preceding claims,
**characterized**
**in that** the antenna area has a size of between 2 mm² and 20 mm², in particular between 5 mm² and 15 mm².

9. Circuit arrangement according to one of the preceding claims,
**characterized**
**in that** a further antenna is arranged on the secondary side, the area of this antenna adding to the virtual area.

10. Ultrasound sensor as part of a parking aid system in a vehicle, having a sound transducer and a circuit arrangement according to one of the preceding claims.

## Revendications

1. Circuit (1) d'évaluation et/ou de commande de convertisseurs acoustiques (2, 22) en vue de leur utilisation dans des véhicules, en particulier comme éléments d'une assistance au stationnement, le circuit (1) comprenant un transformateur (12, 23) doté d'un bobinage primaire (7, 8) et d'un bobinage secondaire (16), les bobinages entraînant un rapport de transformation u supérieur à 1, des bornes de raccordement d'un convertisseur acoustique (2, 22) étant prévues sur le bobinage secondaire (16), des bornes de raccordement (7, 8) pour des moyens de commande qui appliquent sur le bobinage primaire (7, 8) du transformateur (12, 23) une tension qui varie dans le temps étant prévues sur le bobinage primaire,
**caractérisé en ce que**
une antenne (20, 36) prévue pour recevoir des champs électriques formés par des signaux parasites et reliée par un parcours de couplage (21, 37) au côté du bobinage secondaire (16) (côté secondaire) est prévue sur un côté du bobinage primaire (7, 8) (côté primaire), un moyen de déphasage qui a pour effet un déphasage de 180° des signaux électriques parasites reçus par l'antenne (20, 36) étant prévu dans le parcours de couplage (21, 37).

2. Circuit selon la revendication 1, **caractérisé en ce que** la géométrie de l'antenne (20, 36) est conçue de telle sorte que l'amplitude des signaux reçus corresponde sensiblement à l'amplitude des signaux électriques parasites injectés sur le côté secondaire.

3. Circuit selon la revendication 1, **caractérisé en ce qu'**un côté du transformateur (12, 23) sert de moyen de déphasage, **en ce que** le parcours de couplage (21, 37) traversant le transformateur (12, 23) et **en ce que** l'antenne (20, 36) est raccordée entre le premier moyen de commande (4, 34) et la borne de raccordement prévue pour lui sur le bobinage primaire (7).

4. Circuit selon l'une des revendications précédentes, **caractérisé en ce que** l'antenne (20, 36) est configurée comme conducteur plat présentant une surface d'antenne définie.

5. Circuit selon la revendication 4, **caractérisé en ce que** la surface d'antenne est adaptée à la surface virtuelle formée par les conducteurs du côté secondaire, divisée par le rapport de transformation u, et en particulier lui correspond au moins approximativement.

6. Circuit selon la revendication 5, **caractérisé en ce que** la surface d'antenne a une forme rectangulaire ou circulaire.

7. Circuit selon l'une des revendications précédentes, **caractérisé en ce qu'**une deuxième antenne de surface définie est raccordée sur le côté primaire entre un deuxième moyen de commande et la borne de raccordement prévue pour ce dernier sur l'enroulement primaire, la surface de la deuxième antenne étant différente de la surface de la première antenne.

8. Circuit selon l'une des revendications précédentes, **caractérisé en ce que** la surface d'antenne a une taille comprise entre 2 mm² et 20 mm² et en particulier entre 5 mm² et 15 mm².

9. Circuit selon l'une des revendications précédentes, **caractérisé en qu'**une autre antenne dont la surface est rajoutée à la surface virtuelle est disposée sur le côté secondaire.

10. Sonde d'ultrasons faisant partie d'une assistance au stationnement d'un véhicule et dotée d'un convertisseur acoustique et d'un circuit selon l'une des revendications précédentes.
